(19) Europäisches Patentamt
European Patent Office
Office européen des brevets

(11) **EP 2 388 623 B1**

(12) **EUROPÄISCHE PATENTSCHRIFT**

(45) Veröffentlichungstag und Bekanntmachung des Hinweises auf die Patenterteilung:
**07.11.2012 Patentblatt 2012/45**

(51) Int Cl.:
***G01V 3/08*** *(2006.01)*

(21) Anmeldenummer: **11161804.7**

(22) Anmeldetag: **11.04.2011**

(54) **Kapazitivsensor**

Capacitative sensor

Capteur capacitif

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2010 DE 102010029059**

(43) Veröffentlichungstag der Anmeldung:
**23.11.2011 Patentblatt 2011/47**

(73) Patentinhaber: **Robert Bosch GmbH
70442 Stuttgart (DE)**

(72) Erfinder: **Zibold, Tobias
70567, Stuttgart (DE)**

(56) Entgegenhaltungen:
**WO-A1-02/086459       US-A- 5 767 678
US-A1- 2006 022 682**

**Beschreibung**

Stand der Technik

Zum Auffinden einer Struktur innerhalb einer Wand werden auf kapazitiven Messverfahren beruhende Balkenfinder ("Studfinder") verwendet. Dabei sind unterschiedliche Ausführungsformen bekannt. Meist wird mehr oder weniger direkt ein Aufladeverhalten einer auf der Wand platzierten Elektrode bestimmt. Die Kapazität zwischen der Elektrode und der Wand ist im Bereich eines Balkens unterschiedlich von einer Kapazität ohne einen Balken, so dass der Unterschied angezeigt werden kann. In anderen Ansätzen wird eine Änderung der Kapazität zwischen der Elektrode und der Wand bestimmt. Es sind auch Geräte mit mehreren Elektroden bekannt, wobei die Änderung der Kapazität bezüglich unterschiedlichen Elektrodenpaaren gemessen wird. Üblicherweise ist es erforderlich, ein solches Gerät auf der Wand zu kalibrieren, da die Geräte den Wandkontakt nicht selbst erkennen können und die Kapazität so stark von Umgebungsbedingungen wie Feuchtigkeit und Temperatur abhängt, dass es nicht möglich ist, das Gerät bei der Herstellung einmalig zu kalibrieren.

Bekannte Balkendetektoren sind anfällig gegen Verkippen zur Wand, da dies den Abstand zur Wand ändert, wodurch die gemessenen Kapazitäten verändert werden. Die Wand ist üblicherweise leitfähig und wirkt daher selbst wie eine geerdete Elektrode, von der aus ein Strom zu einem Benutzer fließen kann, der den Balkendetektor verwendet. Durch einen solchen Strom kann das Messergebnis zusätzlich verfälscht werden.

Der Erfindung liegt die Aufgabe zugrunde, einen Kapazitivsensor bereitzustellen, der keine Kalibrierung während der Anwendung erfordert und dessen Handhabung vereinfacht ist.

Aus der US 2006/0022682 ist ein elektrischer Annäherungssensor bekannt, der eine Sensoreinheit mit einer Ground-Elektrode, einer Guard-Elektrode und einer Detektionselektrode aufweist, die symmetrisch zu einer Achse angeordnet sind. Eine zugehörige Detektionsschaltung versorgt im Normalbetrieb die Guard-Elektrode mit einer ersten oszillierenden Spannung. Die Detektionsschaltung der US 2006/0022682 sieht einen Controller vor, der es ermöglicht, ein zweites Oszillationssignal gleicher Phase und Spannung bereit zu stellen. Dieses zweite Signal wird während eines Selbst-Diagnose-Modes der Vorrichtung unterbrochen. Ein Kontroll-Schaltkreis detektiert ist auf Grundlage der Änderung des Detektionssignals zwischen dem Normal-Mode und dem Selbst-Diagnose Mode, ob die Sensoreinheit korrekt mit der Detektionsschalteinheit verbunden

Offenbarung der Erfindung

Die Erfindung löst dieses Problem durch eine Messvorrichtung mit den Merkmalen des Anspruchs 1 und durch ein Messverfahren mit den Merkmalen des Anspruchs 8. Unteransprüche geben bevorzugte Ausführungsformen wieder.

Eine erfindungsgemäße Messvorrichtung zur Erfassung eines dielektrischen Objekts umfasst zwei Elektroden zur Erzeugung elektrischer Felder, eine Elektrode zur Aufnahme eines elektrischen Potentials, eine Steuereinrichtung zur Versorgung der ersten und der zweiten Elektrode mit zueinander phasenverschobenen, vorzugsweise um 180° phasenverschobene, periodischen Spannungen, wobei die Spannungen mit zueinander gegenläufigen Modulationssignalen amplitudenmoduliert sind, eine Auswerteeinrichtung zur kohärenten Amplitudendemodulation einer an der dritten Elektrode anliegenden elektrischen Kenngröße, eine Bestimmungseinrichtung zur Bestimmung eines Intervalls, das zwischen dem Erreichen eines vorbestimmten Werts durch eines der Modulationssignale und einem Nulldurchgang der demodulierten Kenngröße liegt. Ferner ist eine Ausgabeeinrichtung zur Ausgabe eines auf das Objekt hinweisenden Signals vorgesehen, falls sich das bestimmte Intervall von einem Referenzintervall unterscheidet, das in Abwesenheit des dielektrischen Objekts im Bereich der Elektroden erfassbar ist.

Zwischen der ersten und der dritten Elektrode sowie zwischen der zweiten und der dritten Elektrode stellen sich Kapazitäten ein. Die bestimmte Zeit ändert sich genau dann, wenn sich der Quotient aus der Differenz und der Summe dieser Kapazitäten ändert. Somit kann ein dielektrisches Objekt im Bereich nur einer der Kapazitäten sicher erfasst werden. Auch kann ein Verkippen der Elektroden gegenüber einem Untergrund, etwa einer Wand, bestimmt werden. Eine unbemerkte Fehlmessung durch einen Benutzer kann dadurch ausgeschlossen werden. In einer Ausführungsform wird das Verkippen erfasst, um eine Bestimmung der Struktur mittels eines anderen Messprinzips durchzuführen.

Vorzugsweise liegen die erste und die zweite Elektrode einander bezüglich der dritten Elektrode gegenüber. Ein Verkippen kann erfasst werden, wenn die Elektroden unterschiedliche Abstände zur Wand haben. Vorzugsweise sind Abstände der dritten Elektrode zu den anderen beiden Elektroden gleich.

Es können noch weitere Elektroden vorgesehen sein, die einander paarweise bezüglich der dritten Elektrode gegenüberliegen und wobei nacheinander unterschiedliche, einander gegenüberliegende Elektroden als erste bzw. zweite Elektroden verschaltet sind. Dadurch kann einerseits ein Verkippen in beliebigen Richtungen erkannt werden. Durch Verwendung mehrerer Elektrodenpaare nacheinander können eine Lagerichtung und/oder eine Verlaufsrichtung eines dielektrischen Objekts bestimmt werden.

Die elektrische Kenngröße ist vorzugsweise eine Spannung. Das Messprinzip ist jedoch nicht auf eine Spannung beschränkt, in einer alternativen Ausführungsform kann die elektrische Kenngröße auch ein Strom sein.

Die Messvorrichtung kann einen Mikrocomputer mit einem Analog-Digital-Wandler (ADC) zur Aufnahme der an der dritten Elektrode anliegenden elektrischen Kenngröße und wenigstens einem Digital-Analog-Wandler (DAC) zur Bereitstellung der an der ersten und der zweiten Elektrode anliegenden Spannungen umfassen. Der Mikrocomputer kann eine oder mehrere Funktionalitäten der beschriebenen Einrichtungen durchführen. Auf diese Weise kann eine kostengünstige, robuste und langzeitstabile Messvorrichtung bereitgestellt sein.

Nach einem weiteren Aspekt umfasst die Erfindung ein Messverfahren zur Bestimmung eines dielektrischen Objekts. Dabei umfasst das Messverfahren den Schritt des Versorgens einer ersten und einer zweiten Elektrode mit zueinander phasenverschobenen, vorzugsweise um 180° phasenverschobenen, periodischen Spannungen, wobei die Spannungen mit zueinander gegenläufigen Modulationssignalen amplitudenmoduliert sind. Weitere Schritte betreffen das kohärente Amplitudendemodulieren einer an der dritten Elektrode anliegenden elektrischen Kenngröße, das Bestimmen eines Intervalls, das zwischen dem Erreichen eines vorbestimmten Werts durch eines der Modulationssignale und einem Nulldurchgang der demodulierenden Kenngröße liegt, und das Erfassens des Objekts, falls sich das bestimmte Intervall von einem Referenzintervall unterscheidet, das in Abwesenheit des elektrischen Objekts erfassbar ist.

Vorzugsweise sind die unmodulierten periodischen Spannungen sinusförmig. Weiter vorzugsweise ist das Modulationssignal sägezahn- oder dreiecksförmig.

Ferner betrifft die Erfindung ein Computerprogrammprodukt mit Programmcodemitteln zur Durchführung des beschriebenen Verfahrens, wenn das Computerprogrammprodukt auf einer Verarbeitungseinrichtung abläuft oder auf einem computerlesbaren Datenträger gespeichert ist.

Kurze Beschreibung der Figuren

Die Erfindung wird nun mit Bezug auf die beigefügten Figuren genauer beschrieben, wobei:

Fig. 1    ein Blockschaltbild einer Messvorrichtung;

Fig. 2    unterschiedliche Anordnungen von Elektroden zur Verwendung mit der Messvorrichtung aus Fig. 1 und

Fig. 3    ein Ablaufdiagramm eines Messverfahrens entsprechend der Messvorrichtung aus Fig. 1

darstellt.

Genaue Beschreibung von Ausführungsbeispielen

Im Folgenden soll zunächst die technische Grundlage der erfindungsgemäßen Herangehensweise kurz erläutert werden. Ohne Beschränkung der Allgemeinheit wird hierbei von sinusförmigen Anregungen mit sägezahnförmiger Amplitudenmodulation ausgegangen, obwohl auch andere periodische Anregungen, beispielsweise dreiecksförmig oder rechteckförmig, und andere Modulationssignale, die vorzugsweise periodisch, monoton und zwischen einem oberen und einem unteren Wert beschränkt sind, denkbar sind.

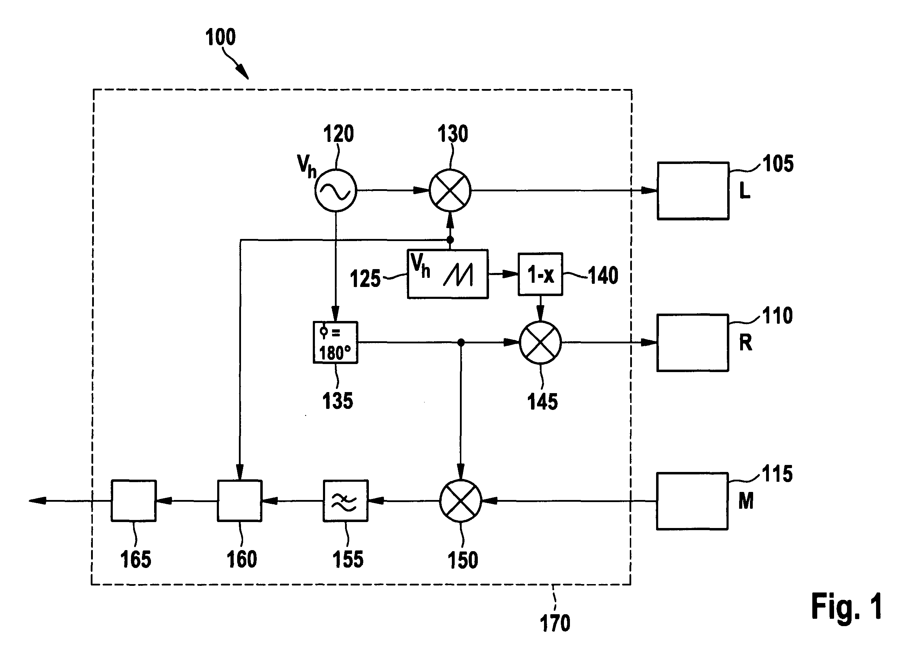

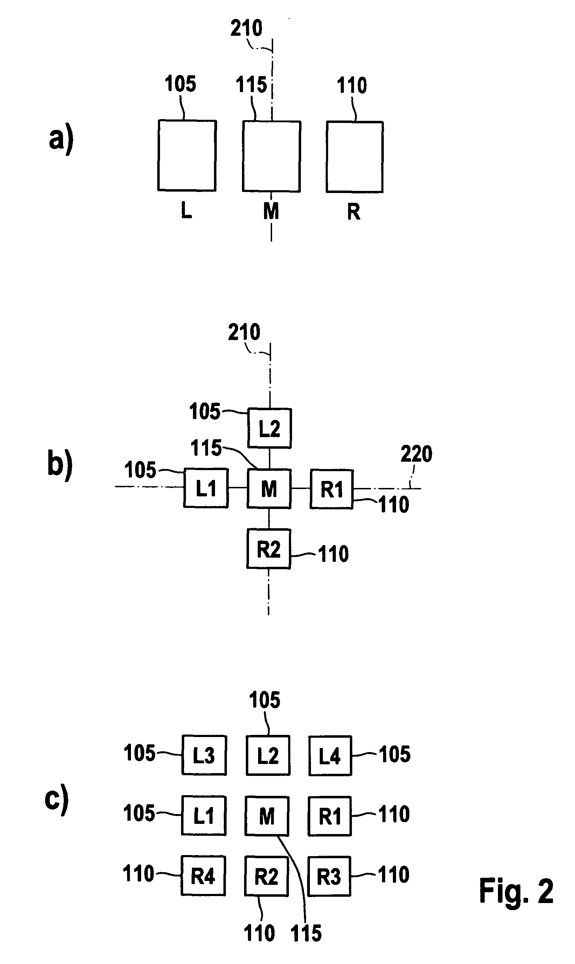

Betrachtet wird eine Konstellation mit einer ersten Elektrode L, einer zweiten Elektrode R und einer dritten Elektrode M, wobei die Elektroden L und R zu beiden Seiten der Elektrode M angeordnet sind (vgl. Fign. 1 und 2a).

Die Spannung an der L-Elektrode entsteht aus einer Sinusspannung. Die Sinusspannung wird mittels eines langsam linear ansteigenden und dann rasch abfallenden Sägezahns amplitudenmoduliert. Die Spannung an der R-Elektrode entsteht aus einer Sinusspannung, die zur Sinusspannung der L-Elektrode um 180° phasenverschoben ist, und mittels eines gegenüber dem anderen Sägezahn invertierten Sägezahns, der langsam linear abfällt und dann steil ansteigt, amplitudenmoduliert ist. Die Frequenz der Sägezähne ist wesentlich geringer als die Frequenz der Sinusspannung.

Es wird nun die Spannung an der M-Elektrode gemessen. Diese Spannung weist denselben amplitudenmodulierten sinusförmigen Verlauf auf:

$$U_M(t) = A_M(t) \cdot \sin(\nu_h t) \qquad\qquad \text{(Formel 1)}$$

wobei AM (t) die Amplitude der Spannung $U_M(t)$ an der dritten Elektrode 115, und $\nu_h$ die Frequenz der periodischen Spannung an den Elektroden 105 und 110 ist.

Dabei gilt:

$$U_M = \frac{C_L U_L + C_R U_R}{C_L + C_R} = \frac{([C_L + C_R] A_L - C_R A_{max})}{C_L + C_R} \cdot \sin(\nu_h t) \qquad \text{(Formel 2)}$$

wobei $C_L$ die Kapazität zwischen der ersten Elektrode 105 und der dritten Elektrode 115, und $C_R$ die Kapazität zwischen der zweiten Elektrode 110 und der dritten Elektrode 115 ist.

Für die Amplitude $A_M(t)$ der Spannung an der M-Elektrode gilt jedoch, dass diese sägezahnförmig zwischen einem unteren Wert und einem oberen Wert variiert:

$$A_M = A_L - \frac{1}{2} A_{max} + \frac{1}{2} \frac{C_L - C_R}{C_L + C_R} A_{max} \qquad \text{(Formel 3)}$$

In Abhängigkeit der kapazitiven Kopplungen $C_L$ und $C_R$ ist der untere Wert kleiner als 0 und der obere Wert größer als 0. Der an der M-Elektrode gemessene Amplitudenverlauf weist daher einen Nulldurchgang bzw. einen Vorzeichenwechsel auf.

Bezüglich eines der Sägezahnsignale, welche zur Modulation der Sinusspannungen für die L- und R-Elektrode verwendet wurden, weist der Nulldurchgang eine Lage auf, die mittels Zeit- bzw. Phasenmessung bestimmt werden kann. Diese Zeit ist abhängig von dem Verhältnis der kapazitiven Kopplungen der Rund der L-Elektrode zur M-Elektrode:

$$(C_L - C_R)/(C_L + C_R) \qquad \text{(Formel 4)}$$

Die Zeit ist hingegen nicht abhängig von den Absolutwerten von $C_R$ und $C_L$. Aus diesem Grund ist eine Kalibrierung durch einen Benutzer während der Anwendung nicht erforderlich.

Wird nun eine Zeit bestimmt, die zwischen dem Beginn des Sägezahns und dem Nulldurchgang des Amplitudenverlaufs an der M-Elektrode im objektfreien Fall verstreicht, also, wenn ein zu erfassendes dielektrisches Objekt nicht im Bereich der drei Elektroden anwesend ist, so kann anhand einer Abweichung des tatsächlichen Nulldurchgangs von dieser Zeit, eine Anwesenheit des Objekts bestimmt werden. Die Bestimmung der Zeit im objektfreien Fall kann im Rahmen der Herstellung einmalig durchgeführt werden. Eine weitere Kalibrierung durch einen Benutzer einer erfindungsgemäßen Messvorrichtung ist nicht erforderlich, da die Absolutwerte von $C_R$ und $C_L$ die Zeitabweichung nicht beeinflussen.

Die beschriebene Abweichung von der zuvor bestimmten Zeit kann folgende Gründe haben:

1. $C_R$ nimmt stärker zu als $C_L$ durch ein Objekt mit einer Dielektrizitätskonstanten größer 1, welches sich näher an der R-Elektrode als an der L-Elektrode befindet
2. $C_L$ nimmt stärker zu als $C_R$ durch ein Objekt mit einer Dielektrizitätskonstanten größer 1, welches sich näher an der L-Elektrode als an der R-Elektrode befindet
3. $C_R$ nimmt stärker zu als $C_L$, weil die Elektrodenanordnung nicht plan auf einer Wand aufliegt, sondern die L-Elektrode einen größeren Abstand zur Wand hat als die R-Elektrode
4. $C_L$ nimmt stärker zu als $C_R$, weil die Sensoranordnung nicht plan auf der Wand aufliegt, sondern die R-Elektrode einen größeren Abstand zur Wand hat als die L-Elektrode.

Eine nach dem beschriebenen Prinzip aufgebaute Messvorrichtung kann dazu verwendet werden, zu bestimmen, ob sich ein Balken als dielektrisches Objekt mit einer Dielektrizitätskonstante größer als 1 links oder rechts von der M-Elektrode befindet. Befindet sich der Balken symmetrisch unter der M-Elektrode, so kann er nicht unmittelbar bestimmt werden. Durch Verschieben der Elektrodenordnung auf der Wand kann jedoch eine Kante des Balkens gefunden werden.

Darüber hinaus kann ein Verkippen des Sensors bestimmt werden. Wird die Sensoranordnung bezüglich der Wand verkippt, so dass die L-Elektrode einen anderen Abstand zur Wand hat als die R-Elektrode, so kann eine ähnliche Zeitdifferenz bestimmt werden, wie bei der oben beschriebenen Erfassung des Balkens.

Fig. 1 zeigt ein Blockschaltbild einer Messvorrichtung 100. Die Messvorrichtung 100 umfasst eine erste Elektrode 105 (L-Elektrode), eine zweite Elektrode 110 (R-Elektrode) und eine dritte Elektrode 115 (M-Elektrode). Ein Oszillator 120 stellt ein periodisches Sinussignal bereit und ein Sägezahngenerator 125 stellt ein Sägezahnsignal bereit. In einem ersten Mischer 130 wird das Sinussignal mit dem Sägezahn amplitudenmoduliert. Die resultierende Spannung wird der ersten Elektrode 105 (L-Elektrode) zugeführt. In einem Phasenschieber 135 wird das Sinussignal des Oszillators 120 um 180° phasenverschoben. In alternativen Ausführungsformen kann anstelle des Phasenschiebers 135 auch ein Symmetrierglied ("Balun") oder ein Inverter verwendet werden. Das vom Sägezahngenerator 125 bereitgestellte Sägezahnsignal wird in einem Inverter 140 invertiert. Ein zweiter Mischer 145 führt eine Amplitudenmodulation des vom Phasenschieber 135 bereitgestellten Sinussignals auf der Basis des vom Inverter 140 bereitgestellten invertierten Sägezahnsignals durch. Das resultierende Signal wird der zweiten Elektrode 110 (R-Elektrode) zugeführt.

Ein kohärenter Demodulator 150 demoduliert eine an der dritten Elektrode 115 (M-Elektrode) anliegende Spannung auf der Basis des vom Oszillator 120 bereitgestellten Sinussignals oder des vom Phasenschieber 135 bereitgestellten phasenverschobenen Sinussignals. Das vom kohärenten Demodulator 150 bereitgestellte Signal wird in einem Tiefpass 155 geglättet. Eine Zeit eines Nulldurchgangs des resultierenden Signals wird mittels eines Phasenkomparators 160 bezüglich des vom Sägezahngenerator 125 bereitgestellten Sägezahnsignals oder des vom Inverter 140 bereitgestellten invertierten Sägezahnsignals bestimmt. Ein Vergleicher 165 vergleicht die bestimmte Zeit mit einer vorbestimmten Zeit und gibt ein Signal aus, wenn sich die Zeiten um mehr als ein vorbestimmtes Maß unterscheiden. Die vorbestimmte Zeit kann experimentell oder rechnerisch beispielsweise im Rahmen der Konzeption oder Herstellung der Messvorrichtung 100 bestimmt sein.

In einer Ausführungsform sind einige oder alle der Elemente 120 bis 165 in einem Mikrocomputer 170 aufgenommen. Zur Ein- und Ausgabe analoger Signale verfügt der Mikrocomputer 170 über entsprechende Analog-Digital-Wandler (ADC) bzw. Digital-Analog-Wandler (DAC). Beispielsweise kann der Mikrocomputer 170 eine algorithmische Auswertung des vom Tiefpass 155 bereitgestellten Signals durchführen und zu diesem Zweck das vom Tiefpass 155 bereitgestellte Signal nach Wandlung durch einen Analog-Digital-Wandler analysieren.

In einer weiteren Ausführungsform kann der Mikrocomputer 170 Signale für die erste Elektrode 105 (L-Elektrode) und die zweite Elektrode 110 (R-Elektrode) statt auf die beschriebene Weise durch periodisches Ausgeben einer Sequenz zuvor abgespeicherter Werte bereitstellen. Die Werte können den modulierten Sinuswerten entsprechen und in einem Speicher abgelegt sein. Das für die Demodulation der an der dritten Elektrode (M-Elektrode) anliegenden Spannung erforderliche Signal kann dabei entsprechend nachgebildet werden, falls die Demodulation nicht durch den Mikrocomputer erfolgt.

In einer Variante kann an Stelle der dritten Elektrode 115 ein Paar von dritten Elektroden 115 verwendet werden, die mit Eingängen eines Differenzverstärkers verbunden sind, wobei der Ausgang des Differenzverstärkers mit dem Eingang des Demodulators 150 verbunden ist. Das Paar von dritten Elektroden 115 ist vorzugsweise derart angeordnet, dass eine Anordnung von Elektroden 105 bis 115 entsteht, die bezüglich einer Achse symmetrisch ist, die zwischen den dritten Elektroden 115 verläuft. Weiter vorzugsweise liegen die dritten Elektroden 115 in einer Ebene mit den ersten beiden Elektroden 105 und 110. Der Differenzverstärker kann beispielsweise mittels eines Operationsverstärkers realisiert sein.

Fig. 2 zeigt unterschiedliche Anordnungen der Elektroden 105 bis 115 zur Verwendung mit der Messvorrichtung 100 aus Fig. 1. In Fig. 2a ist eine Anordnung der Elektroden 105 bis 110 dargestellt, wie sie oben beschrieben wurde. Die erste Elektrode 105 und die zweite Elektrode 110 sind zu beiden Seiten der dritten Elektrode 115 mit gleichen Abständen zu dieser angeordnet. Alle drei Elektroden 105 bis 115 befinden sich in einer Ebene. Ein Verkippen der dargestellten Anordnung bezüglich einer Achse 210 kann wie oben beschrieben erkannt werden.

Eine Anordnung, in der sich die Elektrode 115 in einer ersten Ebene nahe der Wand und die Elektroden 105, 110 in einer zweiten, parallelen Ebene in größerem Abstand zur Wand befindet, ist eine bevorzugte Ausführungsform, bei der der Einfluss des Verkippens auf die an der Elektrode 115 gemessenen Spannung gegenüber Ausführungsformen reduziert wird, bei denen sich alle Elektroden in der ersten Ebene, also nahe der Wand, befinden. Dies ist darauf zurückzuführen, dass die relative Änderung der Kapazitäten als Folge der sich beim Verkippen einstellenden unterschiedlichen Abstände der Elektroden 105, 110 von der Wand klein ist im Vergleich zu einer Anordnung, in der sich alle Elektroden in der ersten Ebene, also nahe der Wand, befinden.

Der Einfluss des Verkippens wird auch, wenngleich in geringerem Maße, reduziert, wenn sich außer den Elektroden 105, 110 auch die Elektrode 115 in der zweiten, parallelen Ebene, also in größerem Abstand zur Wand befinden.

In einer weiteren Ausführungsform ist eine Abschirmelektrode (nicht dargestellt) vorgesehen, die auf einer dem dielektrischen Objekt abgewandten Seite der Elektroden 105-115 angeordnet ist. Die Abschirmelektrode ist vorzugsweise flächig ausgebildet und ausreichend groß, um die Elektroden 105-115 von hinten vollständig abzudecken. Die Abschirmelektrode ist mit einem Potential verbunden, das mittig zwischen den alternierenden Spannungen liegt, die an den Elektroden 105 und 110 anliegen.

In Fig. 2b sind mehrere Paare erster Elektroden 105 (L-Elektroden) und zweiter Elektroden (R-Elektroden) jeweils zu beiden Seiten der dritten Elektrode 115 (M-Elektrode) dargestellt. Ein Verkippen der dargestellten Sensoranordnung um eine oder beide der Achsen 210 oder 220 kann bestimmt werden, indem eine Messung mit den horizontal ausgerichteten Elektroden 105, 110 bzw. den vertikal ausgerichteten Elektroden 105, 110 durchgeführt wird. Auch hier kann eine Abschirmelektrode, wie oben mit Bezug auf Fig. 2a beschrieben wurde, verwendet werden.

Fig. 2c zeigt eine Anordnung von Elektroden 105 bis 115, wobei zusätzlich zu der in Fig. 2b dargestellten Anordnung in den diagonalen Richtungen weitere erste Elektroden 105 und zweite Elektroden 110 angeordnet sind. Durch entsprechende Messungen mit unterschiedlichen, einander bezüglich der dritten Elektrode 115 (M-Elektrode) gegenüberliegenden Paaren erster und zweiter Elektroden 105, 110 kann beispielsweise erfasst werden, in welcher Richtung eine Kante eines Balkens verläuft, welche sich unterhalb der dritten Elektrode 115 (M-Elektrode) befindet. Die oben mit Bezug auf Fig. 2a beschriebene Abschirmelektrode kann auch hier verwendet werden.

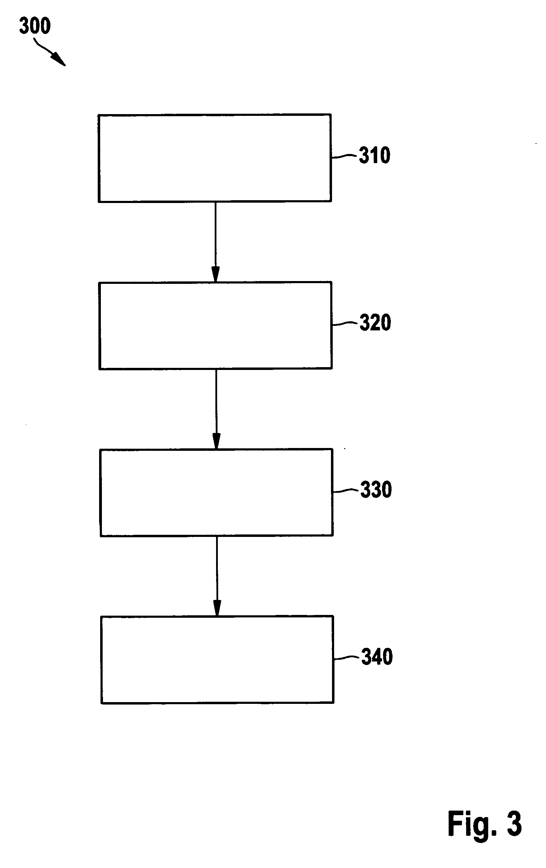

Fig. 3 zeigt ein Ablaufdiagramm eines Messverfahrens 300 entsprechend der Messvorrichtung 100 aus Fig. 1. In einem ersten Schritt 310 werden die erste Elektrode 105 und die zweite Elektrode 110 mit zueinander phasenverschobenenen, vorzugsweise um 180° phasenverschobenen, periodischen Spannungen versorgt, wobei die Spannungen mit zueinander gegenläufigen Modulationssignalen amplitudenmoduliert sind. Vorzugsweise sind die periodischen Spannungen Sinusspannungen und die Modulationssignale wesentlich langsamere Sägezahn-Signale. In einem Schritt 320 wird eine an der dritten Elektrode 115 anliegende elektrische Kenngröße auf der Basis eines der Modulationssignale kohärent amplitudendemoduliert. Vorzugsweise ist die elektrische Kenngröße eine Spannung.

In einem folgenden Schritt 330 wird ein zeitliches Intervall bestimmt, das zwischen dem Erreichen eines vorbestimmten Werts durch eines der Modulationssignale und einem Nulldurchgang der demodulierten Kenngröße liegt. Schließlich wird in einem Schritt 340 das Objekt erfasst, falls sich das bestimmte Intervall von einem Referenzintervall unterscheidet, das in Abwesenheit des dielektrischen Objekts erfassbar ist. Vorzugsweise wird das Referenzintervall bestimmt, indem das Verfahren 300 durchgeführt wird, während sich dielektrische Objekte nicht im Bereich der Elektroden 105 bis 115 befinden bzw. keinen relevanten Einfluss auf die beschriebene Bestimmung haben.

## Patentansprüche

1. Messvorrichtung (100) zur Erfassung eines dielektrischen Objekts, umfassend:

   zwei Elektroden (105,110) zur Erzeugung elektrischer Felder;
   eine Elektrode (115) zur Aufnahme eines elektrischen Potentials;
   eine Steuereinrichtung (120-145) zur Versorgung der ersten und der zweiten Elektrode (105, 110) mit zueinander phasenverschobenen periodischen Spannungen, wobei die Spannungen mit zueinander gegenläufigen Modulationssignalen amplitudenmoduliert sind;
   eine Auswerteeinrichtung (150, 155) zur kohärenten Amplitudendemodulation einer an der dritten Elektrode (115) anliegenden elektrischen Kenngröße; **dadurch gekennzeichnet, dass**:

   eine Bestimmungseinrichtung (160) zur Bestimmung eines zeitlichen Intervalls, das zwischen dem Erreichen eines vorbestimmten Werts der Spannungsamplitude durch eines der Modulationssignale und einem Nulldurchgang der demodulierten Kenngröße liegt; und
   eine Ausgabeeinrichtung (165) zur Ausgabe eines auf das Objekt hinweisenden Signals, falls sich das bestimmte zeitliche Intervall von einem Referenzintervall unterscheidet, das in Abwesenheit des dielektrischen Objekts erfassbar ist.

2. Messvorrichtung (100) nach Anspruch 1, wobei sich die erste Elektrode (105) und die zweite Elektrode (110) bezüglich der dritten Elektrode (115) gegenüber liegen.

3. Messvorrichtung (100) nach Anspruch 2, wobei sich die erste Elektrode (105) und die zweite Elektrode (110) in einer ersten Ebene befinden und sich die dritte Elektrode (115) in einer zweiten, parallelen Ebene befindet, die verglichen mit der ersten Ebene bei der sachgemäßen Verwendung der Erfindung auf einer Wand einen geringeren Abstand zu der Wand hat.

4. Messvorrichtung (100) nach Anspruch 2 oder 3, wobei weitere Elektroden (105, 110) vorgesehen sind, die einander paarweise bezüglich der dritten Elektrode (115) gegenüber liegen und wobei nacheinander unterschiedliche einander gegenüberliegende Elektroden (105, 110) als erste bzw. zweite Elektroden verschaltet sind.

5. Messvorrichtung (100) nach einem der vorangehenden Ansprüche, wobei die elektrische Kenngröße eine Spannung ist.

**6.** Messvorrichtung (100) nach einem der vorangehenden Ansprüche, **gekennzeichnet durch** einen Mikrocomputer (170) mit einem Analog-DigitalWandler zur Aufnahme der an der dritten Elektrode (115) anliegenden elektrischen Kenngröße und wenigstens einem Digital-Analog-Wandler zur Bereitstellung der an der ersten und der zweiten Elektrode (105, 110) anliegenden Spannungen.

**7.** Messvorrichtung (100) nach einem der vorangehenden Ansprüche, wobei die Phasenverschiebung 180° beträgt.

**8.** Messverfahren (300) zur Bestimmung eines dielektrischen Objekts, wobei das Messverfahren (300) folgende Schritte umfasst:

Versorgen (310) einer ersten und einer zweiten Elektrode (105, 110) mit zueinander phasenverschobenen periodischen Spannungen, wobei die Spannungen mit zueinander gegenläufigen Modulationssignalen amplitudenmoduliert sind;
kohärentes Amplitudendemodulieren (320) einer an einer dritten Elektrode (115) anliegenden elektrischen Kenngröße; **dadurch gekennzeichnet, dass**:

Bestimmen (330) eines zeitlichen Intervalls, das zwischen dem Erreichen eines vorbestimmten Werts der Spannungsamplitude durch eines der Modulationssignale und einem Nulldurchgang der demodulierten Kenngröße liegt; und Erfassen (340) des Objekts, falls sich das bestimmte zeitliche Intervall von einem Referenzintervall unterscheidet, das in Abwesenheit des dielektrischen Objekts erfassbar ist.

**9.** Messverfahren (300) nach Anspruch 8, wobei die unmodulierten periodischen Spannungen sinusförmig sind

**10.** Messverfahren (300) nach Anspruch 8 oder 9, wobei das Modulationssignal sägezahnförmig ist.

**11.** Messverfahren (300) nach einem der Ansprüche 8 bis 10, wobei die Phasenverschiebung 180° beträgt.

**12.** Computerprogrammprodukt mit Programmcodemitteln zur Durchführung eines Verfahrens (300) nach einem der Ansprüche 8 bis 11, wenn das Computerprogrammprodukt auf einer Verarbeitungseinrichtung (170) abläuft oder auf einem computerlesbaren Datenträger gespeichert ist.

**Claims**

**1.** Measuring apparatus (100) for sensing a dielectric object, comprising:

two electrodes (105, 110) for producing electrical fields;
an electrode (115) for picking up an electrical potential;
a control device (120 - 145) for supplying the first and second electrodes (105, 110) with periodic voltages that have a phase shift relative to one another,
wherein the voltages have been amplitude-modulated with modulation signals that are in opposite directions relative to one another;
an evaluation device (150, 155) for the coherent amplitude demodulation of an electrical parameter that is applied to the third electrode (115);
**characterized by**
a determination device (160) for determining an interval of time which is situated between one of the modulation signals reaching a predetermined value of the voltage amplitude and a zero crossing for the demodulated parameter; and
an output device (165) for outputting a signal that refers to the object if the determined interval of time differs from a reference interval which can be sensed in the absence of the dielectric object.

**2.** Measuring apparatus (100) according to Claim 1, wherein the first electrode (105) and the second electrode (110) are opposite one another in relation to the third electrode (115).

**3.** Measuring apparatus (100) according to Claim 2, wherein the first electrode (105) and the second electrode (110) are located in a first plane and the third electrode (115) is located in a second, parallel plane which, when the invention is used in the proper fashion on a wall, is at a shorter distance from the wall than the first plane.

4. Measuring apparatus (100) according to Claim 2 or 3, wherein further electrodes (105, 110) are provided which are situated opposite one another in pairs in relation to the third electrode (115) and wherein various electrodes (105, 110) that are opposite one another are connected up in succession as first and second electrodes.

5. Measuring apparatus (100) according to one of the preceding claims, wherein the electrical parameter is a voltage.

6. Measuring apparatus (100) according to one of the preceding claims, **characterized by** a microcomputer (170) having an analogue/digital converter for picking up the electrical parameter that is applied to the third electrode (115) and at least one digital/analogue converter for providing the voltages that are applied to the first and second electrodes (105, 110).

7. Measuring apparatus (100) according to one of the preceding claims, wherein the phase shift is 180°.

8. Measurement method (300) for determining a dielectric object, wherein the measurement method (300) comprises the following steps:

a first and a second electrode (105, 110) are supplied (310) with periodic voltages that have a phase shift relative to one another, wherein the voltages have been amplitude-modulated with modulation signals that are in opposite directions relative to one another;
an electrical parameter that is applied to a third electrode (115) is subjected to coherent amplitude demodulation (320);
**characterized by**:

determination (330) of an interval of time which is situated between one of the modulation signals reaching a predetermined value of the voltage amplitude and a zero crossing for the demodulated parameter; and sensing (340) of the object if the determined interval of time differs from a reference interval which can be sensed in the absence of the dielectric object.

9. Measurement method (300) according to Claim 8, wherein the unmodulated periodic voltages are sinusoidal.

10. Measurement method (300) according to Claim 8 or 9, wherein the modulation signal is sawtooth shaped.

11. Measurement method (300) according to one of Claims 8 to 10, wherein the phase shift is 180°.

12. Computer program product having program code means for carrying out a method (300) according to one of Claims 8 to 11 when a computer program product is executed on a processing device (170) or is stored on a computer-readable data storage medium.


**Revendications**

1. Dispositif de mesure (100) destiné à détecter un objet diélectrique, comprenant :

deux électrodes (105, 110) destinées à générer un champ électrique ;
une électrode (115) destinée à acquérir un potentiel électrique ;
un dispositif de commande (120-145) destiné à fournir aux première et deuxième électrodes (105, 110) des tensions périodiques déphasées les unes par rapport aux autres, les tensions étant modulées en amplitude par des signaux de modulation mutuellement opposés ;
un dispositif d'analyse (150, 155) destiné à soumettre à une modulation d'amplitude cohérente une grandeur caractéristique électrique présente sur la troisième électrode (115) ; **caractérisé par** :

un dispositif de détermination (160) destiné à déterminer un intervalle de temps s'écoulant entre l'instant où une valeur prédéterminée de l'amplitude de tension est atteinte par l'un des signaux de modulation et un passage à zéro de la grandeur caractéristique démodulée ; et
un dispositif de sortie (165) destiné à fournir en sortie un signal représentatif de l'objet lorsque l'intervalle de temps déterminé s'abaisse en dessous d'un intervalle de référence qui peut être détecté en l'absence de l'objet diélectrique.

**2.** Dispositif de mesure (100) selon la revendication 1, dans lequel la première électrode (105) et la deuxième électrode (110) sont situées l'une en face de l'autre par rapport à la troisième électrode (115).

**3.** Dispositif de mesure (100) selon la revendication 2, dans lequel la première électrode (105) et la deuxième électrode (110) se trouvent dans un premier plan et la troisième électrode (115) se trouve dans un deuxième plan parallèle qui, par comparaison au premier plan et lors d'une utilisation appropriée de l'invention sur une paroi, présente une plus faible distance par rapport à la paroi.

**4.** Dispositif de mesure (100) selon la revendication 2 ou 3, dans lequel il est prévu d'autres électrodes (105, 110) qui sont situées de manière opposée les unes aux autres par paires par rapport à la troisième électrode (115) et dans lequel des électrodes opposées les unes aux autres (105, 110) successivement différentes sont connectées en tant que première et deuxième électrodes.

**5.** Dispositif de mesure (100) selon l'une quelconque des revendications précédentes, dans lequel la grandeur caractéristique électrique est une tension.

**6.** Dispositif de mesure (100) selon l'une quelconque des revendications précédentes, **caractérisé par** un microordinateur (170) comprenant un convertisseur analogique-numérique destiné à acquérir des grandeurs caractéristiques électriques présentes sur la troisième électrode (115) et au moins un convertisseur numérique-analogique destiné à fournir les tensions présentes sur les première et deuxième électrodes (105, 110).

**7.** Dispositif de mesure (100) selon l'une quelconque des revendications précédentes, dans lequel le déphasage est de 180°.

**8.** Procédé de mesure (300) destiné à déterminer un objet diélectrique, dans lequel le procédé de mesure (300) comprend les étapes suivantes :

fournir (310) à une première et à une deuxième électrodes (105, 110) des tensions périodiques mutuellement déphasées, les tensions étant modulées en amplitude par des signaux de modulation opposés ;
soumettre à une démodulation d'amplitude cohérente (320) une grandeur caractéristique électrique présente sur une troisième électrode (115) ; **caractérisé par** :

le fait de déterminer (330) un intervalle de temps qui s'écoule entre l'instant où une valeur prédéterminée de l'amplitude de tension est atteinte par l'un des signaux de modulation et un passage à zéro de la grandeur caractéristique démodulée ; et
le fait de détecter (340) l'objet lorsque l'intervalle de temps déterminé s'abaisse en dessous d'un intervalle de référence qui peut être détecté en l'absence de l'objet diélectrique.

**9.** Procédé de mesure (300) selon la revendication 8, dans lequel les tensions périodiques non modulées sont sinusoïdales.

**10.** Procédé de mesure (300) selon la revendication 8 ou 9, dans lequel le signal de modulation est en dents de scie.

**11.** Procédé de mesure (300) selon l'une quelconque des revendications 8 à 10, dans lequel le déphasage est de 180°.

**12.** Produit de programme informatique comprenant des moyens à code de programme destinés à mettre en oeuvre un procédé (300) selon l'une quelconque des revendications 8 à 11 lorsque le produit de programme informatique s'exécute sur un dispositif de traitement (170) ou est stocké sur un support de données lisible par ordinateur.

Fig. 1

a)

105    115    110

L    M    R

210

b)

105
L2

115    220
105    L1    M    R1
110

R2    110

210

c)

105

105    L3    L2    L4    105

105    L1    M    R1    110

110    R4    R2    R3    110

110    115

Fig. 2

300

310

320

330

340

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060022682 A